# EUROPEAN PATENT APPLICATION

(11) **EP 2 175 375 A1**
(43) Date of publication of application: **14.04.2010**
(21) Application number: 08166249.6
(22) Date of filing: 09.10.2008
(51) Int. Cl.: G06F 17/24, G11B 27/00

(54) **Geographic location for an image**

(71) Applicant: Fastrax Ltd, 01510 Vantaa (FI)
(72) Inventor: Kaisti, Kim, 02660 Espoo (FI)
(74) Representative: Westerholm, Carl Christian

(57) **Abstract**

The invention shows a method to provide a geographic location to an acquired image by software positioning and a consequential post-analysis of the coordinates. The method for providing an image with a geographic location comprises sampling of RF-signals that can comprise position signals of at least one position system as RF-data into a buffer as an RF-buffer sample that has a length of a pre-determined time interval up to the triggering the acquiring of the image as a triggering event for saving the content of the buffer for providing an acquired image with buffered sample data for an extraction of the geographic location as to be used as a signature to be associated with said image in a post-analysis, at least partly on the basis of post-sampled data. The invention shows also a related arrangement, device and a software module as well as a data format structure.

## Description

### Field of the invention

The invention relates in general to positioning techniques, but more specifically to providing a geographic location to an image, as defined in the preamble of an independent method claim directed to the method for providing an image with a geographic location.

The invention also relates to an arrangement as defined in the preamble of an independent claim directed to the arrangement for providing an image with geographic location.

The invention also relates to a device as defined in the preamble of an independent claim directed to the device for providing an image with geographic location.

The invention also relates to a data structure format as defined in the preamble of an independent claim directed to the data structure format for an image with a geographic location.

The invention also relates to a software module as defined in the preamble of an independent claim directed to the software module for providing an image with a geographic location.

The invention also relates to a system as defined in the preamble of an independent claim directed to the system for providing image with geographic location.

### Background

Implementation of a positioning function for a camera may appear a challenging task as the time for taking a picture might be short compared to the time needed for acquiring the geographic location at the picture taking position. A typical case a user may run into can be such that when wanting to take a picture, the camera is turned on, adjusted and shortly after the picture is taken, the camera is turned off again. During the time the camera is on, there is not sufficiently time to allow for a traditional GPS device to wake up, acquire the satellites, download the ephemerides and calculate the position before the camera is turned off again. On the other hand, if the camera is kept on while the GPS acquires the position fix, the camera consumes consequently more power and thus the electricity in the battery is sufficient for lesser pictures. GPS-devices also consume current by themselves and thus the longer the position acquisition takes the more power is consumed.

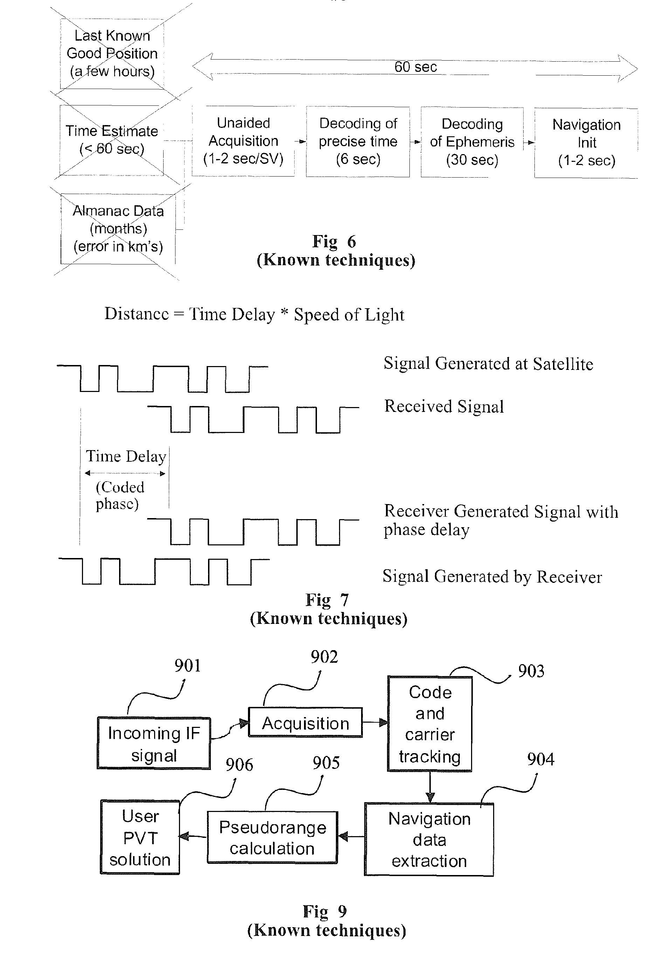

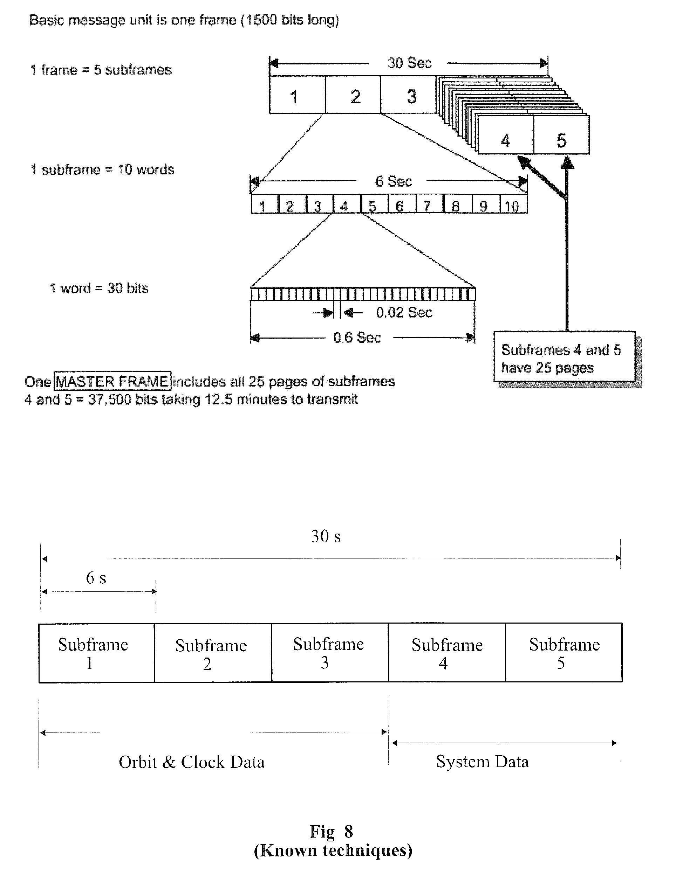

In Fig 6, a cold start time scale is illustrated for a typical GPS-receiver that has no useful information in the memory available. The determination of distance accordingly in a GPS system for positioning purposes is illustrated in Fig 7 and a frame structure of a signal from a GPS-system is illustrated in Fig 8.

Functions of a traditional GPS receiver are illustrated in Fig 9. A traditional GPS receiver consists of an antenna, an RF (Radio Frequency) front-end and a baseband IC (Integrated Circuit), which are not shown as such in Fig 9. The RF front-end converts the RF signal into a digital IF (Intermediate Frequency) signal 901 to be processed by the baseband IC. The baseband IC typically consists of an application processor, some memory, and dedicated HW modules for communication (UART, SPI) and signal processing (correlators, acquisition engine). All the power consuming operations of satellite acquisition 902 and tracking 903, measuring satellite-to-user distances (pseudoranges) 905, demodulating the navigation data to retrieve the satellite ephemerides 904, and calculating the user position 906 are done in the baseband IC. Figure 8 presents tasks in the baseband IC of a typical GPS receiver according to known techniques as such.

### Objectives of the invention

An object of the invention is to solve the problem of the above mentioned timing differences and the alike having an annoying effects in getting geographic location sufficiently quickly, for use within an associated device which is attended to be used at the location to get the position fix for the image acquired by said device. The object is achieved by providing buffered sample data by SW-positioning indicative of geographic position data available to be associated to an image acquired at certain geographic position by the device at said geographic location. Another object of the invention is consequently to reduce the power consumption of the device acquiring the image and thus also extending the operation time of the device, especially in those cases when the device is a portable device. In addition, a further object of the invention is to minimize the power consumption of the positioning device itself, as only a fraction of the energy is needed as compared to a traditional GPS-receiver approach to get a position fix, when using SW-positioning according to the invention.

In addition, still a further object of the invention is that a lower bill-of-material can be used in preferred embodiments of the invention for the SW-positioning hardware, so facilitating to lower the contribution of the hardware costs of the devices, but also for getting a simpler hardware structure that is beneficial in the operation of the devices and thus giving an expectance for more reliable performance. A positioning device part that is capable to receive an RF signal is needed for the receiving of the position signal to be used for the data recordings for the buffered sample data to be used as input for the post-determination of the position fix and the geographic location for association to the image. The signal post-processing can be made by software (SW) for the geographic location and thus hardware costs are saved for the devices involved in the image acquiring and/or position fix determination.

### Short description of the invention

A method for providing a geographic location to an image according to the invention is characterized by the definitions of an independent method claim thereof

A data structure format, for an image with a geographic location according to the invention, is characterized by the definition of an independent claim directed to the data structure format.

A software module, for providing an image with a geographic location according to the invention, is characterized by the definitions of an independent claim directed to the software module.

A device for providing an image with buffered sample data and/or geographic location according to the invention is characterized by the definitions of an independent claim directed to the device.

An arrangement for providing an image with buffered sample data and/or geographic location according to the invention is characterized by the definitions of an independent claim directed to the arrangement.

A system for providing an image with geographic location according to the invention is characterized by the definitions of an independent claim directed to the system.

Other preferred embodiments of the invention are defined and shown as examples in the dependent claims. The expression to comprise, including its deflected forms, is used as an open expression. Embodiments of the invention are combinable in suitable part.

The invention is based on the observation that a Software (SW) based location determining device (SW-positioning device) can be used offline to determine the geographic location from a pre-sampled RF-signal to be associated with an image acquired by a device at the location to be determined. In other words, to determine the geographic location at which the image was acquired, by making a post-analysis from a pre-defined time interval beforehand sampled and saved buffered sample data comprising among the sampled RF-noise also the positioning data of an applicable geographic positioning system or several systems. The geographic location, being facilitated to be used as geographic signature, is finally associated to the acquired image after a post-analysis of the RF-signals in the buffered sample data, for obtaining the geographic location.

A method for providing an image with a geographic location, wherein the providing comprises sampling of an RF-signal, advantageously from at least one positioning system into a buffer that has a length of a pre-determined time interval up to the triggering of the image acquiring as a triggering event for saving the content of the buffer for providing an acquired image with the buffered sample data for an extraction of the geographic location to be associated with said image in a post-analysis, at least partly on the basis of post-sampled data.

In a preferred embodiment of the invention the triggering event is considered as a stimulus and so the saving of the content of the buffer is made, as a first response to a triggering event to be associated with, so said buffer comprising the RF-data as buffered sample data including the data there between the beginning of said pre-determined time interval and said triggering event. The same stimulus can launch the acquiring of an image as a second response to the triggering event to be associated with, in a preferred embodiment of the invention, so that the associating of said image with said buffered sample data or the relating geographic location can be made afterwards in the arrangement, or in such arrangement that forms of a device or a group of devices at least partly arranged to operate as a system according to a preferred embodiment of the invention.

In a preferred embodiment of the invention, the method further comprises detecting the geographic location of said triggering event and/or the location of the acquiring event for the image from said buffered sample data afterwards after a non-pre-determined time interval and associating said image with said geographic location. In a preferred embodiment of the invention the geographic location can be used as a signature to said image.

Optionally the non-pre-determined time interval can be considered a fixed one in such cases that the post-analysis is made in the same host device as the sampling. Although, depending on the calculation flow and the quality of the sampled RF-data the length of said non-pre-determined time interval may vary, although it may be considered essentially approximately uniform for a host device.

In the method according to a preferred embodiment of the invention, the image is or comprises a copy of at least one item of the following: a photograph, a video clip, an audio clip, a document, a phone call, an emergency call, an ensemble of data-grams comprising at least one data-gram and a combination of the just mentioned items.

In the method according to a preferred embodiment of the invention, the non-determined time interval is longer than said pre-determined time interval.

In a preferred embodiment of the invention the method comprises selecting said pre-determined time interval length according to the signal frame structure of the positioning system to comprise a time stamped moment into said pre-determined time interval. Optionally another moment can be selected that facilitates the determination of the moment of the triggering event occurrence or provides means for derivation of a time stamped moment and thus the moment of the triggering event in respect to an arbitrary time stamp that has relevance for the determination of the location of the .triggering event occurrence.

In a preferred embodiment of the invention, the data structure format, for an image with a geographic location, comprises an image part and a buffered sample data part and/or a geographic location part associated to said image part according to a preferred embodiment of the invention, wherein said buffered sample data part is indicative to the geographic position, associative to said image part in explicit at least in a post-analysis after said non-pre-determined time interval.

In a preferred embodiment of the invention the data structure format comprises a key to at least one identification code of a signal source of the positioning signal from the geographic positioning system.

In a preferred embodiment of the invention the software module, for providing an image with a geographic location, is arranged to store a program code capable to execute a method according to a preferred embodiment of the invention.

In a preferred embodiment of the invention the software module is on at least one of the following media: on a chip, on an ASIC-circuit, on a memory card, on a ROM-module, on a memory module, DVD, CD, and on another computer readable media.

In a preferred embodiment of the invention a device, for providing an image with a geographic location, is arranged to store the software module according to a preferred embodiment of the invention in a processor executable form.

In a preferred embodiment of the invention the device can comprise an arrangement according to a preferred embodiment of the invention.

In a preferred embodiment of the invention the arrangement, for providing an image with geographic location, comprises:
- a radio-receiver for sampling radio signals into a buffer, in a frequency range comprising positioning signals of a geographic positioning system, over a pre-determined time interval, for providing the buffer with buffered sample data, said buffered sample data sampled in a form facilitating extraction of geographic coordinates in a post-analysis for forming an image with geographic location,
- a processor configured to comprise means for responding to a triggering event by a first response and a second response, so that said first response comprises saving the content of said buffer as buffered sample data, including the data there between the beginning of said pre-determined time interval and said triggering event, and said second response comprises acquiring and/or saving the acquired image,
- memory for saving the content of the buffer and/or saving the acquired image,
- means for associating said acquired image with said buffered sample data for forming an image with geographic location in a post-analysis,
- means for detecting the geographic location of said triggering event and/or acquired image from said buffered sample data afterwards after a non-pre-determined time interval,
- means for associating said image with said geographic location for saving.

In a preferred embodiment of the invention, the arrangement comprises at least one of the following devices: A camera, copy machine, fax, a computer, PDA, a mobile terminal, a base station, a location service center, a server and a combination of the just abovementioned devices.

In a preferred embodiment of the invention the arrangement comprises diversified a first arrangement part for acquiring the image and the associated buffered sample data and a second arrangement part for making the post-analysis for the geographic location to be associative to said image.

In a preferred embodiment of the invention the system, for providing an image with geographic location, comprises at least two arrangements according to a preferred embodiment of the invention as arranged to communicate with each other directly and/or indirectly via an interface.

In a preferred embodiment of the invention the system comprises a first arrangement arranged to sample and associate the buffered sample data to an image, and a second arrangement arranged to detect the actual geographic position from the image with said geographic location in a post analysis after said non-pre-determined time interval.

In a preferred embodiment of the invention an RF data buffer is formed from the RF-signals available from at least one position system. In a preferred embodiment of the invention at least one such RF-position signal is advantageously present in the RF-buffer, for the post analysis of the location for the corresponding triggering event.

In a preferred embodiment of the invention the location RF-buffer samples and the post analysis data together comprise and/or facilitate the extraction of the geographic location of the triggering event. In a variant, the post-analysis data from the post analysis comprises data on the timing of the location signals.

In a preferred embodiment of the invention the geographic location associated to an image is used as a signature of said image by giving the signature status to said location.

### List of figures

In the following the invention will be described in more detail by referring to the figures 1-5B, Fig 1 - Fig 5B, which in illustrative manner show non-restrictive examples on preferred embodiments of the invention.
- Fig 1: illustrates a method for providing a geographic location to an image according to a preferred embodiment of the invention,
- Fig 2: illustrates an example of a software GPS receiver,
- Fig 3: illustrates an example of use of a software GPS for providing buffered sample data and/or geographic location in the preferred embodied method, categorized according to the acquired image,
- Fig 4: illustrates an example of use of a software-GPS for providing buffered sample data and/or geographic location categorized according to the device used for the acquiring image,
- Fig 5: illustrates examples of preferred embodiments of the invention,
- Fig 5A: illustrates a software module according to a preferred embodiment of the invention,
- Fig 5B: illustrates a data structure format according to a preferred embodiment of the invention,
Figures 6 to 9, Fig 6 to Fig 9, are used to refer known techniques so that
- Fig 6: illustrates Cold Start time scale for a typical GPS receiver that has no useful information in memory,
- Fig 7: illustrates distance determination in a GPS system for positioning,
- Fig 8: illustrates a frame structure of a signal in a GPS-system, and
- Fig 9: illustrates a flow-chart describing typical GPS receiver tasks.

The objects in the drawings are not necessarily in the scale. Same reference numbers are used in the different Figs to denote to similar kind of objects, which objects are not necessarily exactly the same in all Figs, but a skilled man in the art can see the potential differences when read and understood the application text. The term "to comprise" has been used as an open expression as such as well as its deflected forms.

### Detailed description of the invention

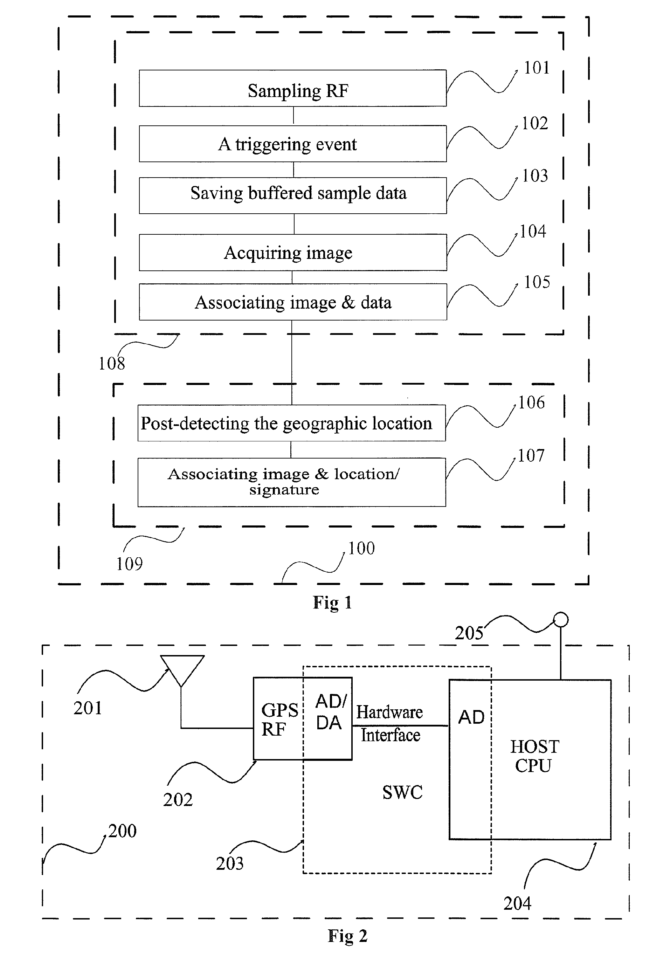

Fig 1 illustrates a method 100 for providing a geographic location to an image according to a preferred embodiment of the invention. The method according to a preferred embodiment has at least two phases 108 and 109 that can be performed even in a single arrangement or a functionally corresponding device, a suitable host device, according to a preferred embodiment of the invention, but according to another preferred embodiment in different devices according to the functionality of the devices to execute the phases. Different devices are useful especially in such a case in which the image acquiring device, as a host device, is arranged to perform the method phase 108 that determines the image and/or the buffered sample data, and the host device were not furnished sufficiently with intelligence to perform the post-analysis and the related associating that were indicated in the phase 109, or the post-detecting were used in such an application that the post analysis were not useful sufficiently to be made in the device for the phase 108 rather than to made in phase 109 in the corresponding device, although the intelligence of the device for phase 108 were sufficient for performing the operations for the phase 109, too.

The Fig 1 has been drawn as simple as rationally feasible and thus for instance functionalities that relate to device turn ons and - offs as well the related initiation routines, setting the parameters of active state of RF-sampling and, the image acquiring as such as well as various adjustments of the equipment for the acquiring are not shown, for acquiring a digital image for instance, nor any phases that relate to packing and processing or encrypting of the image as such. However, those kinds of functionalities can be used in suitable part, even according to known techniques, in for the assistance of the method according to a preferred embodiment of the invention. There are not drawn into Fig 1 also such phases of particularly saving the image, sending, post-processing, and/or presentation of the image after the phase 109, although those phases can be used within the method implementation of preferred embodiments, and/or in a device/arrangement operating according to the embodied method.

A method 100 for providing an image with a geographic location, wherein the providing 108, 109 comprises sampling 101 of RF- position signals of at least one position system as RF-data into a buffer that has a length of a pre-determined time interval up to the launching the acquiring of the image as a triggering event 102 for saving 103 the content of the buffer for providing an acquired 104 image with buffered sample data for an extraction 109 of the geographic location to be associated 107 with said image in a post-analysis 109, at least partly on the basis of post-sampled data.

According to a preferred embodiment of the invention, the sampling 101 of the radio signals into the buffer, in a frequency range comprising radionavigation frequencies, said frequency range comprising positioning signals of a geographic positioning system, at least partly present and/or in a position signal derivable form, is made over a pre-determined time interval for providing the buffer with buffered sample data, said buffered sample data sampled in such a form that facilitate extraction of geographic coordinates in a post-analysis for forming an image with geographic location that, according to a preferred embodiment, can be used as a signature for the image. According to a preferred embodiment of the invention the saving 103 of the buffer content is made as a response to a triggering event 102, so that the content of said buffer as buffered sample data includes the data there between the beginning of said pre-determined time interval and said triggering event. The acquiring 104 of the image can be considered as a second response to said triggering event 102, which can be considered the action to execute or launch the device's functionality, i.e. for the camera as pressing the button to take the image. The image is associated 105 with said RF-data from the buffer, said buffered sample data, for forming an image with buffered sample data.

According to a preferred embodiment of the invention the method further comprises detecting 106 the geographic location/signature of said triggering event and/or the location of acquiring event for the image from said buffered sample data afterwards after a non-pre-determined time interval and associating 107 said image with said geographic location, to be available as a geographic signature.

According to a preferred embodiment of the invention the detecting 106 comprises acquiring information on position system data from a network or database, for the post-analysis and/or other routines of SW-positioning. The post-sampling of the post-sampling data is made for its use in retrieval of the pre-sampled buffered sample data, RF-buffer data, so that the image acquired can be associated to the geographic location extracted from the pre-sampled buffered sample data with help of the post-sampling data. In a preferred embodiment, such post sampling data can comprise the location system details, encryption data keys, identification of satellites as well as also their orbit and clock parameters, but also information for matching the time stamps, for example, in the recorded frame structure. According to a preferred embodiment the database can be arranged to be available as an external database. According to a preferred embodiment of the invention the information can be downloaded from Internet, for instance from a suitable server, or from/via another information network.

The sampling of RF-data can be made according to a SW-GPS-scheme, utilizing in a preferred embodiment software navigation. According to the SW-GPS-scheme, RF-data, that forms the buffered sample data, is sampled continuously into a ring buffer, while the master part of the host device or the arrangement is left in an inactive or passive state. In such state the master part of the host device or the arrangement is in a sleep mode to get quickly recoverable to operate, although appears as it were turned off. Meanwhile, the RF-sampler is sampling and the software module controlling the device as arranged to detect a triggering event for consequently to operate to acquire the image, or according to a preferred embodiment variant to monitor external such triggering events by an external triggering event generator for instance, that would lead to the launch of acquisition of an image relating to the triggering event. According to a preferred embodiment the detecting can be actively maintained although the host device itself were passive, so that the arrangement or device for acquiring the image can be in a sleep mode, but is arranged sufficiently active to operate at an occurrence of a triggering event, or the device is otherwise put in the duty according to the user's desire. According to a preferred embodiment of the invention the RF-sampling is arranged to be in a certain way independent on the host device or the corresponding arrangement part operations. This way the RF-data is available as often as needed for the host device or the corresponding arrangement part. According to a preferred embodiment, the user interface comprises a functionality for the user to decide, is the sampling into the RF-buffer continuously on, or is it set to an intermittent mode, i.e. to have a sampling mode on during a pre-defined time interval and off during another. According to a preferred embodiment the duration of the sampling modes on and offs are user controllable, independently, but according to another preferred embodiment according to a pre-programmed pattern.

The RF-data in such format as sampled comprises all the signals that are present at the receiver as sampled into the ring buffer memory in the frequency range of the receiver. Thus there is also noise as such in the RF-data, but also the signals of the transmitter of the positioning system desired that was present at the sampling event of the buffered sample data. Thus, it is also possible that there can be several signals from various other position systems present at the sampling moment. Thus according to a preferred embodiment of the invention the other position systems can be used for redundancy, for improving accuracy, and/or filling potential gaps of the signals of the used system, because of errors, landscape or various reasons that may lead to some part of a position system transmitter not to transmit in a normal way, or interfere the signal to be received correctly enough for the retrieval.

The method according to embodiment of the invention provides an acquired image with the coordinates of the acquiring site according to the post-analysis of the RF-data sampled and saved as buffered sample data. According to a preferred embodiment of the invention the coordinates form the geographic location of the image. According to a preferred embodiment of the invention the buffered sample data is written into the image, into a specific field therein, but according to another preferred embodiment of the invention, an external scrambling algorithm is used for leaching the geographic data and the image in a predetermined and so detectable way, so that the geographic data can be used for encrypting and/or coding the image, as a packed file with a pass-word. According to a preferred embodiment of the invention the software module comprises a steganographic means to process the acquired image with buffered sample data and/or geographic location. The steganographic means can comprise known algorithms and/or libraries as such in suitable part for the acquired image processing. However, in the encrypting/coding embodiment the data is preferably in such portions and/or packages that facilitate to get at least the RF- data back and the information concerning the location readable and/or to be separable from the image, so that according to a preferred embodiment of the invention the action of encryption/coding of the acquired image is bijective between the image-comprising file in an encrypted mode and in an extracted mode.

According to a preferred embodiment of the invention the post-analysis phase detects the recorded time stamps and/or the other relevant moments for the timing from the sampled RF-data, the buffered sample data, and makes the normal SW-positioning operations from the data to get the geographic location, in the post-analysis phase of the method. In a preferred embodiment extra data can be loaded from a network for the post-analysis. This can be made, if there is not already such information applicably available from a former connection, for instance to identify the position signal sources of a position system apparent to the triggering event location and the relating image acquired, as an example, but not limiting only there to, as making the location determination according to a GPS-standard as such.

When the post-analysis is made, the image is associated with the calculated coordinates as geographic location. According to a preferred embodiment of the invention the buffered sample data is appended or leached to the file comprising the acquired image. According to a preferred embodiment of the invention the resolution of the acquired image file is adjusted for maintaining the file-size. According to a preferred embodiment of the invention, in the post-analysis the buffered sample data is replaced with the geographic location, but according to another preferred embodiment, the geographic location is merely appended to the file comprising the acquired image, in a variant the image can even comprise the buffered sample data as well as the geographic location, but also even the location with a signature status. Thus, it were useful afterwards to make a new post analysis and/or use also other positioning system signals if such were present at the sampling just before the launching of acquiring the image. According to an optional preferred embodiment of the invention relating to the method, in such a preferred embodiment in which the image acquiring device is sufficiently smart to make also the post analysis phase 109, the phase 105 can be omitted in suitable applications and thus time saved when the geographic location is directly associated to the acquired image in a post analysis shortly after the RF-sampling. When a separate device or arrangement is used for the post-analysis of the geographic location from the related RF-data, it is made afterwards even so that the time between the phases 108 and 109 can be even longer than said pre-determined time interval for the ring buffer length.

GPS-signals are used as example in the following, but without any intention to limit the preferred embodiments only to mere GPS-system compatibility, in describing preferred embodiments of the invention. A method according to a preferred embodiment can comprise a selecting phase of the ring-buffer length as a pre-determined time interval length. In a preferred embodiment variant the length is selected according to the signal frame structure of the positioning system that was intended to be used in the location determination. In a preferred embodiment the selection is made to get an RF-signal recorded into the RF-data buffer that RF-signal comprises a time stamp in said pre-determined time interval or optionally another RF-signal feature traceable to a moment that facilitates determination of a time stamped moment,and/or the geographic location.

Fig 2 illustrates as an example a software GPS module 200 that can be integrated to an image acquiring device. In the example in Fig 2, the module 200 comprises a host CPU for making the module adaptation easier. However, in an optional preferred embodiment of the invention the module 200 can be provided without the CPU 204 within the provision that the host devise comprises the CPU capacity for the use. The memory for saving and storing the data and the program to be executed in the HOST CPU 204 are not shown, although may be needed in a mere stand-alone device if no other memory device is available in the host device. The Host CPU can be connected in a preferred embodiment to GPS receiver via an interface there between. In a preferred embodiment there can be an Analog to Digital conversion with an AD device for the purpose, at one side of the interface therebetween the Host CPU and the GPS RF-module, especially in such preferred embodiments in which the RF-module gives analog signal out, for input to the Host CPU. A preferred embodiment that needs an A/D conversion there between is demonstrated by showing the AD at the interface boundary at the HOST CPU and GPS-receiver both sides, having although no intention to limit the location to mere to the shown way of AD or DA. In one preferred embodiment the just mentioned interface operates in an analog mode, so that there will be at least one AD or DA conversion between the Host CPU and the GPS-RF-module for such variant, and the SWC in such a variant is arranged to operate in a corresponding way.

Neither there are shown not more than the symbolic connector 205 as interface to couple the CPU 204 to further devices outside the module 200. The connector 205 symbolizes the functionality to be delivered via the terminal 205 to the devices that belong to the arrangement according to a preferred embodiment of the invention. However, the module 200 is configured so that it could be used in several kind of devices to form an arrangement according to a preferred embodiment of the invention, and according to a preferred embodiment thus has an interface 205 to be utilized for the coupling of the module 200 to a device that is capable to acquire an image. As there can be several kind of image acquiring devices, the interface 205 can be selected accordingly to each in appropriately in question. The linking interface 205 can be implemented wirelessly, but also optionally in suitable part via galvanic connection to the host device being capable to acquire an image. In a preferred embodiment, the interface 205 can be used as interface also for data transference between the devices, or a part of a single device, capable to execute the method phases 108 and 109.

The Fig 2 shows antenna 201 being coupled to an RF-receiver 202 arranged to receive at least GPS-system signals for location determination, but is not necessary limited only to mere GPS. The antenna can be suitable for many frequency ranges. The receiver 202 is coupled via Hardware Interface to the HOST CPU 204 that is configured to implement the method phases according to the phase 108. The calculations and the triggering event detection can be performed at least partly in the CPU 204, as at least partly the performance of the software correlator SWC 203. Depending on the intelligence present in the GPS-RF module, some operations of the SWC 203 can be embodied to be performed therein. However, according to a preferred embodiment of the invention, the whole SWC can be arranged to reside in the GPS-RF. But then also the expenses of the module may be higher because of the memory and processor, and thus the GPS-RF module may be not any more as clearly a lower bill-of device, in such a preferred embodiment.

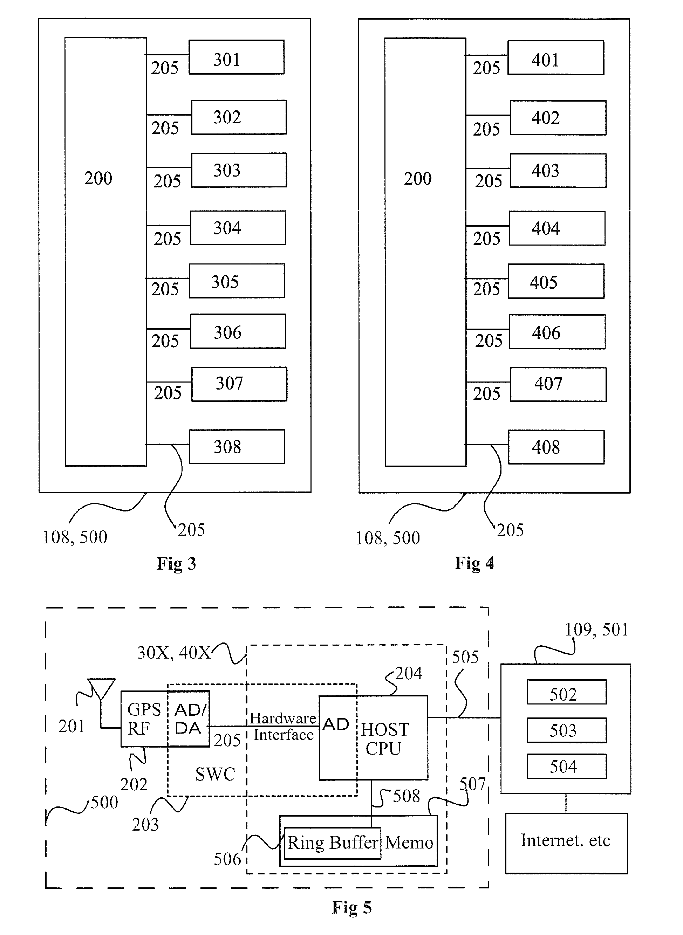

Fig 3 illustrates several kind of images that can be acquired in digital form by the arrangement appropriate for the acquiring the image according to each embodied image. As the method has been described as applied to acquiring an image for camera related preferred embodiments above, it is nevertheless possible to embody the image acquiring with geographic location (and/or buffered sample data) for several other preferred embodiments as shown in the following: The image is itself or the image comprises a copy of at least one item of the following: a photograph 301 acquired by a camera, a video clip 302 acquired by a video camera, an audio clip 303 acquired by an appropriate audio sampling device, a document 304 acquired by a picture making document device, embodied as a fax, copy machine, and/or text-producing device, a phone call 305 acquired by a sampler capable to acquire a phone call into digital form which sampler may be embodied as software, hardware or a combination thereof, an emergency call 306 as an example of a special kind of phone call performed with a phone or other terminal, an ensemble of data-grams 307 comprising at least one data-gram being at least partly acquired into digital form by a computer or a server and a combination 308 of the just mentioned items, as acquired according to the capability of the device, as a multi-tasking capable device, such as a portable computer, PDA, or an intelligent mobile phone, for example.

Fig 4 illustrates an ensemble of various arrangements according to a preferred embodiment of the invention. Each arrangement comprises the module 200 that was introduced via the examples relating to Fig 2. In Fig 4 there is indicated for instance such an arrangement that comprises the interface 205, as drawn between the module 200 and the server 408. For other arrangements the interface is drawn but and marked with the reference numeral without the curved line. So the Fig 4 illustrates at least such arrangements that comprise in addition to the module 200 and the interface 205 at least one of the following devices: A camera 401, copy machine 402, fax 403, a computer 404, PDA 404, a mobile terminal 405, a base station 406, a location service center 407 and a server 408. According to the Fig 4, (as well as according to Fig 3), there are several combinations of the various devices possible to make in the arrangement, but in most cases one module 200 is sufficient per arrangement although preferred embodiments may allow presence of two or even more modules per arrangement, which variants are not excluded from the scope.

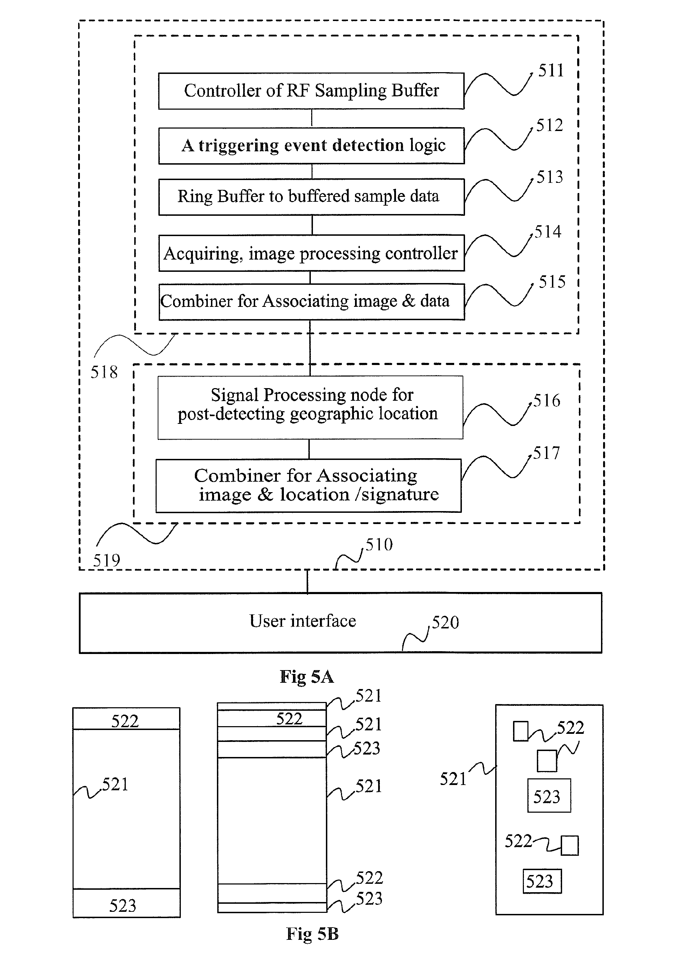

Fig 5 illustrates examples of an arrangement 500, 501 according to a preferred embodiment of the invention. The arrangement for providing an acquired image with geographic location comprises a radio-receiver 201, 202 for sampling into a buffer radio signals, in a frequency range comprising positioning signals of a geographic positioning system, over a pre-determined time interval for providing the buffer with buffered sample data, said buffered sample data sampled in a form facilitating extraction of geographic coordinates in a post-analysis for forming an image with the geographic location. According to a preferred embodiment of the invention the arrangement comprises a processor 204 configured to comprise means for responding to a triggering event by at least a first response and a second response, so that said first response comprises saving the content of said buffer as buffered sample data, including the data there between the beginning of said pre-determined time interval and said triggering event, and said second response comprises acquiring and/or saving the acquired image. According to a preferred embodiment of the invention the arrangement comprises memory 507 for saving the acquired image with said buffered sample data 506. According to a preferred embodiment of the invention the arrangement comprises means for associating 204 said acquired image with said buffered sample data for forming an image with geographic location in a post analysis. According to a preferred embodiment of the invention the arrangement comprises means for detecting the geographic location/signature 204, 501 of said triggering event and/or acquired image from said buffered sample data afterwards after a non-pre-determined time interval. According to a preferred embodiment of the invention the arrangement comprises means for associating 204, 501 said image with said geographic location/signature, for saving.

In a preferred embodiment of the invention, the acquiring of post-analysis data for a position system from a data base for the post-analysis and/or other routines of SW-positioning is made in the device part making the post analysis, but is not limited only thereto.

According to a preferred embodiment, the arrangement can comprise a part 501 that comprises means for detecting 502 the geographic location (and optionally giving a status of signature) of said triggering event and/or the acquired image at it from said buffered sample data. The detection can be made afterwards after a non-pre-determined time interval as based at least partly to post-analysis data. The part 501 can comprise also the means for associating 503 said image with said geographic location and optionally also with a signature status for saving. According to a preferred embodiment the arrangement part 501 can be implemented in a separate device 501. This is advantageous, for instance when the CPU 204 is too small to perform the post analysis functions in the arrangement or in the appropriate parte of it alone with the CPU's available capacity and/or peripherals. In such a preferred embodiment the arrangement can comprise a functionally connectable computer, PDA and/or server for providing the computing capacity for providing the intelligence needed for the post-analysis in the device 501. Means 502 can be implemented as software means as well as means 503 to be executed in the processor of the device 501, which processor is not shown in Fig 5, however, ASIC-circuit or other hardware can be used in suitable part in the implementation, although may be thus more expensive in that kind of embodiment. The program code for the software to run on the host device, as well as maintain temporary files, data, buffers and the image as well as the geographic location and the related data as well as the acquired parameters on the positioning system can be stored in the memory 504. The line 505 illustrates an interface between the arrangement part or device 501, the part related to perform the method part 109, and the arrangement part or device 500, the part related to perform the method part 108, which is indicated by the reference so made in the Fig 5. Although the Fig 5 embodies an example as shown therein, as relating to the arrangement parts, the dynamic features are not limited only to the mentioned, nor to the strict order of the written appearance. Preferred embodiments can comprise such features but are not necessarily limited to the same order as indicative by dynamic features on execution as ordered written in the text.

Fig 5 shows also that in the arrangement there is a HOST CPU to be used in the arrangement according to a preferred embodiment of the invention. The Fig 2 was indicating preferred embodiments that were easier to post-mount to a device to get the functionality of the method according to the preferred embodiments of the invention. However, Fig 5 indicate a more tight integration to the host device, although does not exclude embodiments that have a post-mount facility to a device 30X and/or to device 40X, wherein the X is used to denote to characters 1 to 8 according to the last character in the reference numeral in Figs 3 and/or 4. For the Fig 3 the character 30X refers to the image, as well as to the device relating to the acquiring of image.

Although the way of drawing in Fig 5 indicate an example on such an arrangement in which the Host device's resources for CPU and memory 507 are used in the arrangement, including the Ring Buffer 506 set-up, the storage of the data, programs, temporary files, images and the various logs on the ongoing procedure can be implemented also by an external memory device. Especially parameters that are stored for the post analysis can be in a different memory location as the memory 507, but is not limited only to such preferred embodiment. Parameters and/or position analysis related data, post-sampled data, that are used in the post analysis can be recalled from a network, Internet or from a database for instance, for the post analysis and saved in suitable part into a memory that is external to the device comprising the memory 507.

In the Fig 5 the device 501 is connected to internet, but also other networks may be used as well, in suitable part to access to data and/or such parameters that are needed for the geographic location determination. This data and/or parameters are referred as the post sampled data, to be sampled for the use in addition to the pre-sampled RF-buffer data in the SW-positioning as such. The connection demonstrated by a vertical short line, in Fig 5 leading to device 501 may be used also to convey parameters even to the module 500 or a part of it for the buffered sample data related sampling. The positioning system specific details, as the time frame and the details on the frame structure can be so delivered to the system part or parts, comprising a device 500 and a device 501. Also algorithms for the detecting, saving data, packing, encrypting/coding as well as the inverse operations and the calculation of the geographic coordinates for the geographic location for the image can be so conveyed to the appropriate parts of the system according to the capabilities of the preferred embodiment in question.

Fig 5A illustrates a software module according to a preferred embodiment of the invention. Such a module is preferably recorded on a computer readable medium. So processors in the various devices that acquire images can read the module and execute the functionality accordingly. In the example of Fig 5A there is the user interface 520 that allows the user to control the operations of the method, the arrangement and/or the detail settings of the software module. Such operations comprise input/output operations for the image, update-related operations relating to the software itself, and/or any other means 511-519, as well as setting parameters that are used in the means.

The user interface comprise also an option to select if the post analysis made in the same host device as the RF-sampling. This can be made according to the detection performed by the software on that if the host device was intelligent enough to perform the signal processing in the arrangement or should an external device, i.e. computer for instance, be used for the buffered sample data conversion to geographic location of an image, and for saving the image with the signature in an appropriate data format according to a preferred embodiment of the invention.

According to a preferred embodiment of the invention the software module 510 comprises a controller 511 for controlling the RF-sampling details, such as the buffer length and its saving for the position system in question. In a preferred embodiment also several buffers can be used, for several position systems respectively in a preferred embodiment, but in another also several buffers per position system, so facilitating reading one buffer while another buffer is collecting data. According to a preferred embodiment of the invention the software module 510 comprises also a logic 512 that is arranged to detect occurrences of triggering events in the host device. That is also arranged with a routine 513 so that when a triggering event occurs, the buffer content is saved with its length covering the data there between the beginning of said pre-determined time interval and said triggering event so comprising the sampled RF-data to be used for the buffered sample data, later to be retrieved according to a preferred embodiment directly in the host device, but according to another preferred embodiment in a second device for the post-detecting of the coordinates to be used as the geographic location for the acquired image.

When the triggering event occurs, it initiates the image processing controller 514 to launch the acquiring of an image and to make the related settings for getting the image according to the most appropriate parameter values of the host device. According to a preferred embodiment of the invention the image processing controller 514 also set the adjustments needed for the acquiring of an image, as well as saves the image, but also consults with the routine 513 3 to associate the buffer content to a file. According to a preferred embodiment of the invention the file can comprise in addition to at least one acquired image, also at least one of the following: buffered sample data according to a preferred embodiment as based on the buffer content, geographic location, and an image, document, a voice clip, a video clip.

According to a preferred embodiment of the invention the signal processing node 516 is used for making the signal processing from the buffered sample data to form the coordinates as geographic location for the acquired image. The coordinates are calculated after the triggering event that stops the RF-sampling at least temporarily, and so according to a preferred embodiment of the invention the coordinate detection is a post-detection process. The node 516 can use known algorithms as such as well as known data libraries for the data processing in suitable part as such. The combiner 517 associates the geographic coordinates, to the image acquired in a file, as the geographic location of the image. According to a preferred embodiment, the combiner can adjust the image file size as the geographic coordinates are appended. According to a preferred embodiment the file size adjustment is made for removing the RF-buffer data parts that are no more needed and thus regarded as mere noise, because the geographic location of the triggering event has been obtained already or the relevant data extracted for the purpose. However, according to a preferred embodiment also the RF-data can be optionally left untouched for potential later retrieval.

In one preferred embodiment ensemble of variants, also the post-sampled data is appended to the file. According to a preferred embodiment the user is facilitated to control over at least one of the following: the RF-data buffer size, its content, the image, the post-analysis data acquisition, use of external codecs for the image encryption/coding, the location systems to be used for the geographic location determination, use of the geographic location as a geographic location and a combination thereof. The user may select in a preferred embodiment of the invention via the user interface 520 in which format the image is saved, and/or is the image encrypted/coded or which image format used, according to the image species. The module part 518 is consistent with the functionality of the method phase 108 and the module part 519 is consistent with the functionality of the method phase 109.

The buffer can be a ring buffer in a preferred embodiment, so that there is thus always the buffer-length wise RF-sample from the last pre-determined time period that equals the ring buffer length. The software module takes care also of the buffer maintenance, so that if there were no triggering event at all, the RF-sampling continues into the buffer by over-writing the earliest moment sampled data item in the buffer. So, if the buffer length was set to 8 seconds, there is always available, after the first 8 seconds, the RF-sample ready for use up to the triggering event. This applies as long as the host device was turned completely off or put in another way into an inactive state in which there is no detecting performed for the triggering events.

According to a preferred embodiment of the invention the software module can comprise means to control the image acquiring device's parameters including the activity state parameters, including also turning on and/offs, according to the relevant settings selectably from the options in the user interface comprising automatically made settings and/or settings made in user's manual control. According to a preferred embodiment of the invention the software module can communicate with the post-analysis part of the device or arrangement on the acquiring post-analysis data for a position system from a data base for the post-analysis and/or other routines of SW-positioning.

Data format structure according to a preferred embodiment of the invention is demonstrated as an example in Fig 5B. The data format structure comprises the image in a known format as such, openly written in one ensemble of preferred embodiments, but in another as encrypted with an external algorithm. The data format structure also comprises additionally at least one of the buffered sample data part or the geographic location. The rectangle 521 demonstrate the image part as acquired as a result of an triggering event into the file. The part 522 demonstrates the buffer data part as being associated with the image 521 to comprise the buffered sample data. According to a preferred embodiment, the parts 521 and 522 are not necessarily in the same file. Although the Fig 5B show the part 522 at the beginning of the file in a preferred embodiment, in another preferred embodiment the part 522 is appended to the end of the file, after the image 521, as the block 523 demonstrates the position. A key to at least one identification code of a signal source of the positioning signal from the geographic positioning system can be indicated in a block which is its own but similar as 522 in the file (not shown), or the information can be stored within the RF-data block.

According to a preferred embodiment of the invention the buffered sample data can be written into the part 522 or into part 523, but the geographic location can be written to the other one part according to a preferred embodiment, but is not limited only such embodiment. According to a preferred embodiment variant, the data and the coordinates can reside in a mixed mode in the parts 522 and/or 523. At the middle in Fig 5B, it is demonstrated that the parts 521, 522 and/or 523 can alter in a certain pre-determined order, but in a preferred embodiment also in number. According to a preferred embodiment of the invention demonstrated at the right, the parts 522 and/or 523, the latter when present, is mounted into the image part 521. In such a preferred embodiment the software module that is arranged to retrieve the file, needs to know the file format and the preferred embodiment specific lay-out of the blocks in the file. This can be made in a known way as such, for instance by adding a table at the beginning or in another pre-defined part of the file to indicate the geographic location and/or buffered sample data blocks.

When read and understood the application text, a skilled person in the art realizes for instance that although the buffer has been embodied as a ring buffer in various examples on embodiments, similar buffering can be performed optionally by such an ensemble of buffers of other types that are capable of providing similar kind of periodical way of saving the RF-data. At the simplest, this can be made by two parallel linear buffers comprising a first part and second part periodically used for savings so that data is saved at first into the first part until the first part is full, then saved into the second part until it is full. Then again into the first part until after the filling to second part etc, so providing at least one buffer length of the two with data over a pre-determined time interval available to be accessible for association to an image and the geographic location determination for said image after its acquiring.

It is apparent to a person skilled in the art that as technology advanced, the basic idea of the invention can be implemented in various ways. The invention and its embodiments are therefore not restricted to the above examples, but they may vary within the scope of the claims.

### Example 1

A user has a digital camera as a device that additionally comprises a SW-GPS device and so forms an arrangement according to a preferred embodiment of the invention. In one variant the camera and the SW-GPS are integrated into a device, whereas in another variant the camera and SW-GPS are separate but arranged to functionally communicate with each other. Taking a picture is considered triggering the processor of the device, that of the camera, to acquire the image according to the normal course of taking a picture as such as usually such a known camera would do according to the known techniques as such.

A user turns his/her/its camera on. The software present in the camera informs the user that according to the settings in the camera, it is in the active state and is sampling RF-data for the ring buffer for the buffered sample data for the next acquired image. When the buffer contains the pre-determined time interval lengthwise RF-data, it informs the user that the software positioning is available for the image acquiring, and the camera ready for the association of the data buffer content for the buffered sample data to the image when such is acquired. In a preferred embodiment the software may also ask is there other images to be associated with this buffered sample data for geographic location signature and the user may do the associations according to the user's selection.

However, according to a preferred embodiment of the invention the SW-GPS device (Soft Ware GPS device) has been sampling RF-signals in a frequency range typical for the GPS positioning system and the SW-GPS device was recording the signals during a pre-determined time interval. Additionally all the available RF-noise was recorded, so actually facilitating use of multiple positioning systems within the provision of the RF-frequencies received are applicable. For the sake of an example, the pre-determined time interval was selected to be equal or less than 8 seconds according to a preferred embodiment, but equal or less than 6.5 seconds for another preferred embodiment. In one ensemble of preferred embodiments the buffer length was selected to be over 2 seconds. In one ensemble of preferred embodiments, below 12 seconds, but in a further preferred embodiments as short as possible to get an RF-signal recoded into the buffer that is reliably associatable to a known moment of the locationing system's transmission, but below 5 seconds.

As in a preferred embodiment, the RF-data is recorded for worth of 8s, in this example, in a ring-buffer continuously, when the camera is in an active state to detect a triggering event such as the launch of the acquisition of an image, and to stop the recording once the camera user decides to take a photograph with the digital camera, so executing the triggering event latching the saving of the RF-data into the ring buffer. In a preferred embodiment the RF-data saving continues for getting a new buffer content in the pace of the saving so that there is available RF-data for a next image if taken straight after. The 8s of RF-data comprises also the GPS-position system signals with suitable time stamp for the post analysis and thus the RF-data forms the buffered sample data to be associated and stored together with the image data into the memory of the camera. The camera can be turned off immediately after the image was taken. At the triggering event there were RF-signals of 5 position satellites available and their signals were recorded into the buffered sample data for the post-analysis to yield a geographic location for the image. Later, in the post analysis a 3-D position was calculated and used as a geographic location for the image..

The user is willing to turn off the camera, and according to a preferred embodiment, the software module part asks the user before turning off should the active state of RF-sampling still continue and the device collect RF-data while the camera is essentially turned off. As the user may still take pictures, the camera is left sampling the RF-data, so facilitating next time very fast image acquisition, when there is a full buffer expected at the appropriate location of acquiring an image. Similar functionality can be available in other embodiments directed to other image acquiring devices in suitable part.

The position was calculated in explicit off-line, when the user downloaded the images from the camera to a computer, but later also to his PDA. The user acquired also identity information and/or acquired post-analysis data for the position system from a data base for the post-analysis and/or other routines of SW-positioning. The detected geographic position as associated to the image forms the geographic signature for the image. The position based signature is saved within the image into the data format structure. According to a preferred embodiment the data structure comprises for the signature a field that is a separated field from the image, but according to another preferred embodiment the signature is interlaced into the image, and according to a further embodiment the signature is used to scramble the image according to a certain predetermined format.

The computer and the camera together with the software form two arrangements according to a preferred embodiment of the invention and thus a system according to a preferred embodiment of the invention. The camera that was used was such a camera that is capable only to do the RF-sampling and association of the buffered sample data to the acquired image, and needs another device to perform the post-analysis, as the processor was old and slow. However, the same user has another camera which is similar, but provided with a greater intelligence, i.e. with a better processor, giving capability to do the first phase of acquiring the image and sampling the RF-signals of the position system for the buffered sample data, but also to do the second phase comprising the post-analysis and association of the geographic location to the acquired image alone. So, the acquired images from this camera do not necessary need to be treated with the computer to get the same geographic location before the storing of the images.

After the above mentioned procedure, the camera user downloads a newer version of the software module for the post analysis that still executes the method according to a preferred embodiment of the invention in the camera in suitable part. The software module was available on a DVD and a memory module from which the latter was easier to plug directly into the camera. The other camera was updated by using the DVD with the help of the computer in suitable part.

The user noticed that the post-analysis revealed that the RF-data had also GLONASS-system signals present for a redundant positioning purposes. The user noticed also that the system noticed and allowed to select Beidou-system signals were available, may be because of a demonstration or other trial of the system. The post-analysis device also found some traces of presence of EGNOS and WAAS systems from the signals, but found them not applicable for the first image acquired, but applicable for the second and on, for improvement of the accuracy of the coordinates for the geographic location.

### Example 2

The devices are similar kind of digital cameras as in the Example 1, but the positioning device is a GALILEO-satellite-signal-receiving-device, preferably implemented as an SW-device as the SW-GPS for sampling the RF-signals in the appropriate frequency range in the Example 1 above, so forming an arrangement according to a preferred embodiment of the invention, but with a SW-GALILEO device. In one preferred embodiment variant the camera and the SW-GALILEO device are integrated into one device, whereas in another variant the camera and SW-GALILEO are separate but arranged to functionally communicate with each other. The ring-buffer length is set to a pre-determined time interval to include a time stamp of the GALILEO-satellites signal in the transmitting sequence. The triggering event was defined as acquiring the picture as the image to be associated with the geographic position data sampled into the RF-sample for the post-analysis of the signals of the GALILEO-system. The geographic position was calculated according to the Example 1, but with an appropriate digital signal processing algorithm for the GALILEO-data to get finally the GALILEO-related geographic location for the acquired image. In this example the camera user downloads also a newer software code, but first such a piece of software that comprises mere GALILEO related aspects considered for getting the geographic location, but the user notices that there is also a multi-satellite version available that comprises in addition to SW-GPS codes also SW-GALILEO codes for post-analysis getting the image saved with the geographic location. According to a preferred embodiment the RF-sampler is arranged to be able to receive also position signals of another positioning system at the appropriate frequencies.

### Example 3

The device in this example comprises a mobile terminal, and the positioning device is a SW-GPS, so forming an arrangement according to a preferred embodiment of the invention. In one variant the mobile terminal and the SW-GPS are integrated into a single device, whereas in another variant mobile terminal and SW-GPS are separate but arranged to functionally communicate with each other. The user of the mobile terminal starts a phone call or another voice recording event and records a portion of the voice in digital form into the memory of the mobile terminal so making an image of the part of the phone call or the other event. The mobile terminal acts according to the camera that was mentioned in the Example 1, but for providing the voice-image with a geographic location as the picture-image was provided in the Example 1. The triggering event was the start of the phone call, although the end of it could have been selected too.

The user stops the phone call, as another triggering event, and selects to associate to the voice-image another geographic location corresponding to the location a the stopping. In one preferred embodiment the user associates both geographic locations to the image, but in another the user decides to reject either one of the two. In one preferred embodiment the post analysis is made in the device, but in another variant in an external server to which the image with the geographic location was sent.

The user sends the voice-image with the buffered sample data home to his/her spouse that receives the datagram by using a personal computer and performs a post-analysis to detect the actual geographic position of the triggering event from the geographic location data to check the location of which bar her/his spouse was suspected to be / pretending to be.

In this Example the functionality of the system according to a preferred embodiment of the invention was diversified in a geographic sense, as the user may be in a bar in a city but the user's spouse in another city, even in a different country.

### Example 4

The user takes a digital video clip as an image and provides it with at least one geographic location/signature data according to appropriate triggering event(s). Such triggering event is at least one of the following: the start of the clip, a pause set on, the pause set off, the end of the clip. The associating of the geographic location data with the image, now with a video-image, occurs in a similar way in suitable part as the user did in the Example 3 with the voice-image.

### Example 5

The user writes a document to be converted into digital form as provided with a handwritten signature. The copy/fax machine has a positioning device that is a SW-GPS-device. The image is formed from the document in a digital form and the triggering event is the scanning of the document so that the geographic position data representing the position of the copy/fax machine is recorded and associated with the document. A bank, provided with a similar copy/fax machine as above mentioned copy/fax machine of the user, (but not limited only thereto), receives the document-image with the buffered sample data a nd post-calculates the geographic location of the user and his document sending device, assuming that they are the same site within a reasonable accuracy. If the calculated location has a match to that of that of the user's device's already known and/or other way authenticated, the geographic location is used as a further step in the defense in depth concept of the bank to indicate authenticity of the document and so the allowance of the document for its intended use with a match, but otherwise to reject said document or as an item to indicate unreliability of the document.

### Example 6

A container for transporting cargo is provided with detecting device comprising an RF-sampler in a SW-GPS, with a ring buffer and a memory module with a capacity to geographic location data at a number of locations to be associated with a triggering event at each. The detecting device is arranged to comprise also an event generator that is configured to generate a triggering event at once a day. At the destination of the cargo container, the memory module in the container is post analyzed and the triggering events with the associated geographic locations related to the geographic position data are determined, for controlling/checking the route of the cargo within the container. The triggering generator was implemented in one ensemble of preferred embodiments for the Example 6 by a software based timer into the same memory module, which was also provided with a processor and a lower bill-of RF-sampler.

## Claims

1. A method (100) for providing an image with a geographic location, **wherein** the providing (108, 109) comprises sampling (101) of RF- position signals of at least one position system as RF-data into a buffer that has a length of a pre-determined time interval up to the triggering the acquiring of the image as a triggering event (102) for saving (103) the content of the buffer for providing an acquired (104) image with buffered sample data for an extraction (109) of the geographic location to be associated (107) with said image in a post-analysis (109), at least partly on the basis of post-sampled data.

2. The method, for providing a geographic location to an image according to claim 1, **comprising:**
- sampling (101) into a buffer RF-radio signals, in a frequency range comprising frequencies of positioning signals of a geographic positioning system, over a pre-determined time interval for providing the buffer with buffered sample data, said buffered sample data sampled in a form facilitating extraction of geographic coordinates in a post-analysis for forming an image with a geographic location,
- saving (103), as a first response to a triggering event (102), the content of said buffer as buffered sample data co vering the data there between the beginning of said pre-determined time interval and said triggering event,
- acquiring (104) an image as a second response to the triggering event (102) to be associated with,
- associating (105) said image with said buffered sample data.

3. The method according to claim 1, **wherein** the method further comprises:
- detecting (106) the geographic location of said triggering event and/or the location for the acquired image, from said buffered sample data afterwards after a non-pre-determined time interval, and
- associating (107) said image with said geographic location.

4. The method according to claim 2, **wherein** the detecting (106) comprises acquiring post-analysis data for a position system from a data base for the post-analysis and/or other routines of SW-positioning.

5. The method according to claim 1, **wherein** acquired by an appropriate acquiring device for the image in question, said image is or comprises, a copy of at least one item of the following: a photograph (301), a video clip (302), an audio clip (303), a document (304), a phone call (305), an emergency call (305), an ensemble (306) of data-grams comprising at least one data-gram, a server file (307) and a combination (308) comprising at least two parts of the just mentioned items (301, 302,303,304,305,306,307).

6. The method according to any one of the preceding claims, **wherein** the method comprises selecting said pre-determined time interval length according to the signal frame structure of the positioning system to comprise a time stamped moment of a frame into said pre-determined time interval or optionally another moment that facilitates determination of a time stamped moment for location.

7. A data structure format, for an image with a geographic location, **comprising** an image part and a buffered sample data part, a geographic location part and/or signature status indicator, associated to said image part according to any of the claims 1 to 6, wherein said buffered sample data part and/or geographic location part is indicative to the geographic position of the acquiring event of the image, associative to said image part in a post-analysis after said non-pre-determined time interval.

8. The data structure format according to claim 7, **comprising** a key to at least one identification code of a signal source of the positioning signal from the geographic positioning system.

9. A software module, for providing an image with a geographic location, **arranged** to store a program code capable to execute a method according to claim 1.

10. The software module according to claim 9, **wherein** said module is stored within one of the following media: on a chip, on an ASIC-circuit, on a memory card, on a ROM -module, on a memory module, DVD, CD, on another computer readable media.

11. A device, for providing an image with geographic location, **comprising** the software module according to claim 9.

12. An arrangement, for providing an image with geographic location, **comprising:**
- a radio-receiver for sampling radio signals into a buffer, in a frequency range comprising positioning signals of a geographic positioning system, over a pre-determined time interval, for providing the buffer with buffered sample data, said buffered sample data sampled in a form facilitating extraction of geographic coordinates in a post-analysis for forming an image with geographic location,
- a processor configured to comprise means for responding to a triggering event by a first response and a second response, so that said first response comprises saving the content of said buffer as buffered sample data, including the data there between the beginning of said pre-determined time interval and said triggering event, and said second response comprises acquiring and/or saving the acquired image,
- memory for saving the content of the buffer and/or saving the acquired image,
- means for associating said acquired image with said buffered sample data for forming an image with geographic location in a post-analysis,
- means for detecting the geographic location/signature of said triggering event and/or acquired image from said buffered sample data aft erwards after a non-pre-determined time interval,
- means for associating said image with said geographic location/signature for saving.

13. The arrangement of claim 12, **wherein** said arrangement comprises at least one of the following devices: A camera (401), scanner and/or copy machine (402), fax (403), a computer (404), PDA (404), a mobile terminal (405), a base station (406), a location service center (407), a server (408) and a combination comprising at least two abovementioned devices (401, 402, 403, 404, 405, 406, 407).

14. The arrangement according to claim 12 or 13, **wherein** the arrangement comprises diversified a first arrangement part for acquiring the image and the associated buffered sample data and a second arrangement part for making the post-analysis for the geographic location to be associative to said image.

15. A system, for providing an image with geographic location, **comprising** at least two arrangements according to claim 13 or 14, of which arrangements at least two parts are arranged to functionally communicate with each other directly and/or indirectly via an interface, so that a first arrangement part is arranged to sample and associate the buffered sample data to an image, and a second arrangement part is arranged to detect the actual geographic position from the image with said geographic location in a post analysis after a non-pre-determined time interval.

16. Use of a geographic location associated to an image as signature of said image..
